# EUROPEAN PATENT SPECIFICATION

(11) **EP 2 725 942 B1**
(45) Date of publication and mention of the grant of the patent: **18.05.2016**
(21) Application number: 12801918.9
(22) Date of filing: 19.06.2012
(51) Int. Cl.: A47C 1/032, B60N 2/22

(54) **A SEATING FURNITURE WITH A FITTING**
SITZMÖBEL MIT EINEM BESCHLAG
ÉLÉMENT DE SIÈGE AVEC UNE FERRURE

(30) Priority: 20.06.2011 NO 20110882
(43) Date of publication of application: 07.05.2014
(73) Proprietor: Sandvik Møbler AS, 6150 Ørsta (NO)
(72) Inventor: VELLE, Trond, N-6150 Ørsta (NO)
(74) Representative: Zacco Norway AS
(86) International application number: PCT/NO2012/050111
(87) International publication number: WO 2012/177142

(56) References cited:
- WO-A1-94/16600
- BE-A5- 1 013 970
- DE-A1- 3 033 953
- GB-A- 871 130
- GB-A- 2 390 806
- GB-A- 2 390 806
- US-A- 809 944
- US-A- 5 785 384

## Description

The present invention relates to seating furniture, and in particular it relates to a fitting for a piece of seating furniture as disclosed in the preamble of claim 1.

In the field of seating furniture, many solutions are previously known for the tilting of the seat and/or back, but a common feature of these solutions is either that they are bulky and then usually intended for seating furniture of the recliner type, or that they have various defects or drawbacks as regards operation and/or sitting comfort in the case of the slimmer types of seating furniture such as, for instance, the chair taught in US 2005/0006936 A1, which seems to be a kitchen or dining room type chair.

A particular object of the invention is to provide a slim fitting structure for slimmer types of seating furniture, as, for example, dining room furniture. The fitting solution according to the invention advantageously allows the production of dining room furniture which has a completely ordinary, slim appearance, but where the back can be tilted. At the filing date of the present PCT application, the applicant has already achieved considerable success with the dining room chairs "Regina" and "Andrea", based on the fitting according to the invention.

Of other prior art, although with entirely different objects and entirely different constructions, but where lateral slide channels or slots are used for adjusting the tilting position of the piece of seating furniture, mention may be made of the aeroplane seat presented in GB 2 390 806 A and the car seat presented in US 6 129 420 A.

Another seating furniture is disclosed by US 5 785 384 A1 according to the preamble of claim 1.

In order to provide a slim and simple structure with good sitting and operating comfort which seeks to remedy the aforementioned or other defects or drawbacks, there is provided, according to the invention, a fitting for a piece of seating furniture as disclosed in the characterising clause of claim 1.

Advantageous embodiments of the invention are set forth in the dependent claims.

An advantageous, non-limiting embodiment of the invention is described in more detail below, with reference to the attached drawings, wherein:
Figure 1 is a side view of a fitting for a piece of seating furniture, connected to a back and a seat with the back tilted backwards to the maximum.
Figure 2 is a side view corresponding to the view in Fig. 1, but with the back tilted forwards to the maximum.

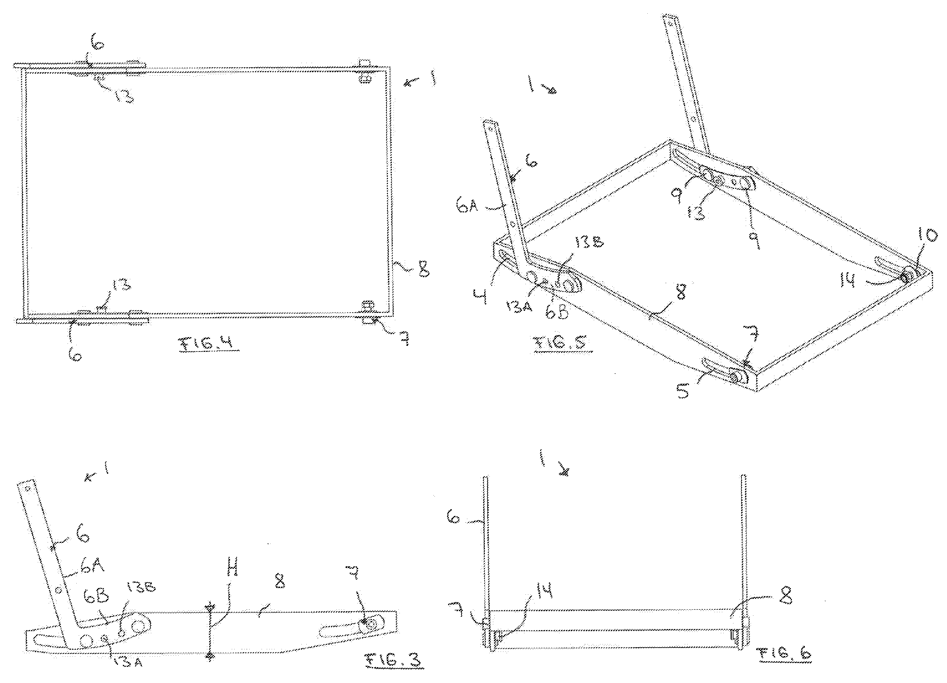

Figure 3 is a side view of the fitting in Figs. 1 and 2;
Figure 4 is a top view of the fitting in Figs. 1 and 2;
Figure 5 is a perspective view of the fitting in Figs. 1 and 2;
Figure 6 is a front view of the fitting in Figs. 1 and 2; and
Figure 7 is a superimposition of Fig. 1 and Fig. 2, showing a virtual axis of rotation for the back.

In the following description and claims, the directional designations such as "forward", "rear", "upwards", "downwards", "forwards", "backwards", "front", "downward projecting" etc. are related to a fitting for an upright piece of seating furniture, in its natural position of use, as shown or indicated in the drawings.

Furthermore, the term "piece of seating furniture" should be understood to comprise both chairs and sofas, where, in the case of a sofa, a plurality of fittings according to the invention may be provided, preferably corresponding to the number of seats to allow individual adjustment of each individual seat.

Moreover, although the term "virtual axis of rotation" is perhaps self-explanatory in the light of the description, a virtual axis of rotation for the back, unlike a physical axis of rotation for the back, means that the back does not rotate about a fixed support at the actual axis of rotation, for example a support some way up in the back via a rear portion of two respective chair arms, but that the support of the back is found elsewhere than at the virtual axis of rotation, in the present case advantageously in a radially configured sliding support associated with the rear part of the fitting. In the case of both alternatives, however, the rotation of the back takes place about the physical or virtual axis of rotation, respectively.

With reference to the attached figures, there is according to the invention provided a fitting 1 for a piece of seating furniture, and where the piece of seating furniture further comprises a back 2 and a seat 3, connected to the fitting 1.

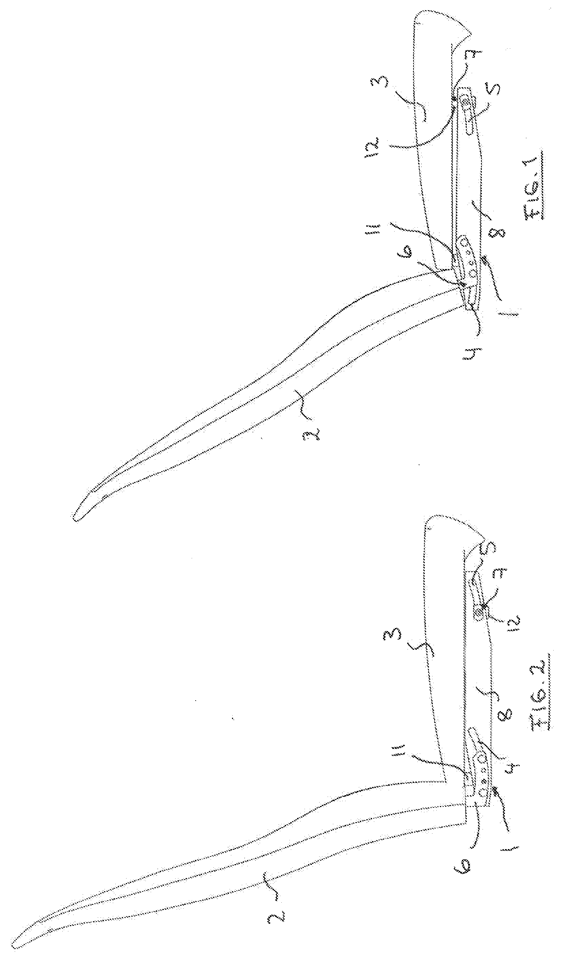

The fitting 1 comprises at its two respective sides a rear slot 4 and a forward slot 5, the rear slot being provided as an arcuate or radial section with its centre of rotation, and thus a virtual axis of rotation R for the back 3, facing upwards in relation to the fitting 1, and the forward slot 5 being provided as a correspondingly directed radial or arcuate section, alternatively a linear section with a gradient in the direction of the front of the piece of seating furniture, and thus of the fitting 1, wherein in the rear slot 4 there runs a rear coupling piece 6 coupled respectively to the back 2 and to a rear portion of the seat 3, and wherein in the forward slot 5 there runs a forward coupling piece 7 coupled to a forward portion of the seat 3. As is shown in particular in Figs. 1, 2 and 7, the slots 4, 5 are advantageously arranged under the seat 3. The slots 4, 5 in the illustrated embodiment are advantageously through-going and the coupling pieces 6, 7 extend over each side of the slots 4, 5.

In an alternative, non-illustrated embodiment, the slots 4, 5 are advantageously not through-going and the coupling pieces 6, 7 extend over only one side of the slots 4, 5.

The fitting 1 in the illustrated embodiment advantageously includes a separate frame 8 in which the slots 4, 5 are arranged.

In an alternative, non-illustrated embodiment, the slots 4, 5 are advantageously recessed into the actual structure of the piece of seating furniture.

The rear coupling piece 6 is advantageously essentially L-shaped, seen in the direction of the front of the piece of seating furniture, the long side 6A of the L being coupled to the back 2 and the short side 6B of the L being coupled to the slot 4 via a plurality of slide blocks 9 arranged along the length of the short side 6B of the L.

In the illustrated embodiment, two slide blocks 9 are advantageously arranged on the rear coupling piece 6 and run in the rear slot 4, whilst one slide block 10 is arranged on the forward coupling piece 7 and runs in the forward slot 5. As a non-illustrated alternative to two slide blocks 9, there may be provided one elongate slide block with slide faces of a similar radius as the rear slot 4, and thus configured to the shape of the slot 4.

The slide blocks 9, 10 are advantageously of plastic, at least the part of the fitting 1 comprising the slots 4, 5 being of steel.

The slide blocks 9, 10 may alternatively be of a composite material, at least the part of the fitting 1 comprising the slots 4, 5 being of plastic, and wherein the whole fitting 1 is advantageously of solid-cast plastic/composite material.

To the seat 3 are advantageously fixedly attached rear 11 and forward 12 downward projecting connecting pieces for pivotal attachment to respectively the rear coupling piece 6 and the forward coupling piece 7 at respective pivot bearing points 13, 14, of which pivot bearing point 13 on the rear coupling piece 6 is movable between a first position 13A and a second position 13B for easy alteration of the tilting properties of the fitting 1.

Thus, according to the invention, there is provided a particularly slim and simple fitting 1 with little height H which is also suitable for slim pieces of seating furniture such as dining room chairs.

With the correct design of the fitting 1, including a correct choice of radii or courses for the slots 4, 5 and/or friction between the slide blocks 9, 10 and the slots 4, 5, the need for locking mechanisms in connection with the fitting 1 is advantageously avoided, as the fitting 1 will provide good balance where the user can sit in a relaxed way in any possible tilting position and where a deliberate and active movement must be made in order to change the tilting position. When the user deliberately presses the back backwards, he will be able to change the back 2 angle steplessly backwards into the desired position, and when the user deliberately gets up, the back 2 and the seat 3 of the piece of seating furniture will follow the body's movement up into an upright position.

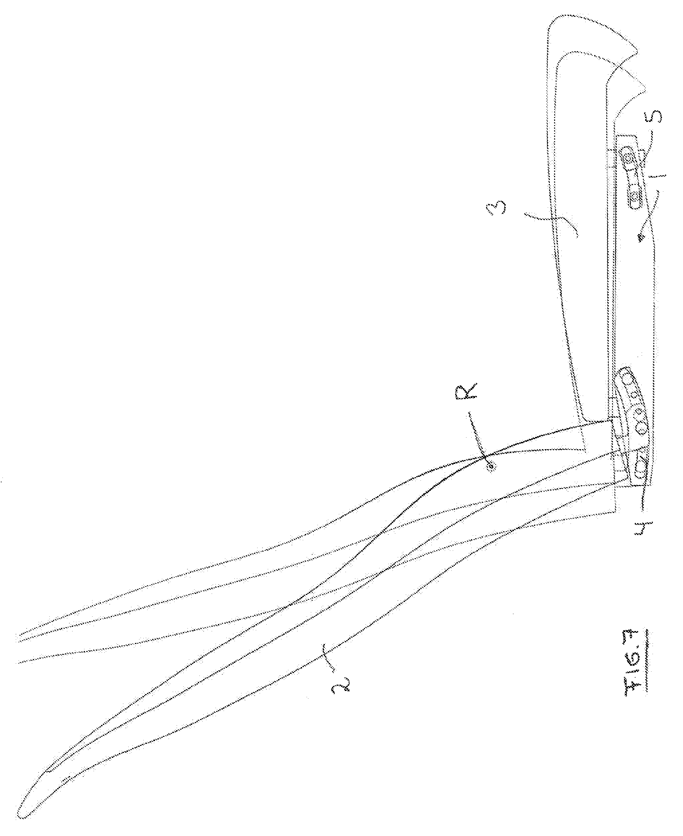

As can be seen in particular from Fig. 7, the rear slot 5 is advantageously radially shaped and with the long side 6A of the coupling piece 6 for attachment of the back 2 projecting radially upwards/inwards from the slot 4, the axis of rotation R for the back 2 then running through the back 2, seen in side view, and advantageously on a level with the lumbar region of a user's back, and which allows better balance and thus simplified alteration of the tilting position of the back 2 while using the piece of seating furniture.

Although the coupling piece 6 is shown as L-shaped, it could, as one of many alternatives, have the shape of an inverted letter T.

The present invention is not limited to the illustrated or described embodiment, but can be varied within the scope of the attached claims.

## Claims

1. A seating furniture comprising a back (2) and a seat (3) and having a fitting (1), wherein the fitting (1) at its two respective sides comprises a rear slot (4) and a forward slot (5) at the same level under the seat (3), the rear slot (4) being provided as an arcuate or radial section with its centre of rotation, and thus a virtual axis of rotation (R) for the back (3), facing upwards in relation to the fitting (1), and the forward slot (5) being provided as a similarly directed radial or arcuate section, alternatively a linear section with a gradient in the direction of the front of the piece of seating furniture, and thus of the fitting (1), wherein in the rear slot (4) there runs a rear coupling piece (6) coupled respectively to the back (2) and to a rear portion of the seat (3), and wherein in the front slot (5) there runs a forward coupling piece (7) coupled to a forward portion of the seat (3), **characterized in that**
a portion (6B) of the rear coupling piece (6) is coupled to each rear slot (4) respectively via a plurality of slide blocks (9) arranged along the length of each of said portion (6B) or via an elongate slide block with slide faces of a similar radius as the rear slot (4).

2. The seating furniture according to claim 1, wherein the slots (4, 5) are through-going, and that the coupling pieces (7) extend over each side of the slots (4, 5).

3. The seating furniture according to claim 1, wherein the slots (4, 5) are not through-going, and that the coupling pieces (6, 7) extend over only one side of the slots (4, 5).

4. The seating furniture according to any one of the preceding claims, further comprising a separate frame (8) in which the slots (4, 5) are arranged.

5. The seating furniture according to claims 1 and 3, wherein the slots (4, 5) are recessed into the actual structure of the piece of seating furniture.

6. The seating furniture according to any one of the preceding claims, wherein the rear coupling piece (6) is essentially L-shaped, seen in the direction of the front of the piece of seating furniture, the long side (6A) of the L being coupled to the back (2) and the short side (6B) of the L being coupled to the slot (4) via a plurality of slide blocks (9) arranged along the length of the short side of the L.

7. The seating furniture according to claim 6, wherein two slide blocks (9) are arranged on the rear coupling piece (6) run in the rear slot (4), and that one slide block (10) arranged on the forward coupling piece (7) runs in the forward slot (5).

8. The seating furniture according to claim 6 or 7, wherein the slide blocks (9, 10) are of plastic, at least the part of the fitting (1) comprising the slots (4, 5) being of steel.

9. The seating furniture according to claim 6 or 7, wherein the slide blocks (9, 10) are of composite material, at least the part of the fitting (1) comprising the slots (4, 5) being of plastic.

10. The seating furniture according to any one of the preceding claims, wherein to the seat (3) are fixedly attached rear (11) and forward (12) downward projecting connecting pieces for pivotal attachment to respectively the rear coupling piece (6) and the forward coupling piece (7) at respective pivot bearing points (13, 14), of which the pivot bearing point (13) in the rear coupling piece (6) is movable between a first position (13A) and a second position (13B) for easy alteration of the tilting properties of the fitting (1).

11. The seating furniture according to any one of the preceding claims, wherein the virtual axis of rotation (R) runs through the back (2), advantageously on a level with the lumbar region of a user's back.

## Patentansprüche

1. Sitzmöbel, der eine Lehne (2) und einen Sitz (3) umfasst sowie ein Fitting (1) aufweist,
wobei das Fitting (1) an seinen beiden jeweiligen Seiten einen hinteren Schlitz (4) und einen vorderen Schlitz (5) auf der gleichen Ebene unter dem Sitz (3) umfasst,
welcher hintere Schlitz (4) als ein bogenförmiger oder radialer Abschnitt mit seinem Drehzentrum und somit einer virtuellen Drehachse (R) für die Lehne (3), die im Verhältnis zum Fitting (1) nach oben zeigt, vorgesehen ist,
und welcher vordere Schlitz (5) als ein ähnlich gerichteter radialer oder bogenförmiger Abschnitt, wahlweise ein geradliniger Abschnitt mit einer Neigung in Richtung der Vorderseite des Sitzmöbelstücks und somit des Beschlags (1) vorgesehen ist,
wobei im hinteren Schlitz (4) ein hinteres mit der Lehne (2) bzw. mit einem Hinterteil des Sitzes (3) gekuppeltes Kupplungsstück (6) verläuft,
und wobei im vorderen Schlitz (5) ein vorderes mit einem Vorderteil des Sitzes (3) gekuppeltes Kupplungsstück (7) verläuft,
**dadurch gekennzeichnet dass**
ein Teil (6B) des hinteren Kupplungsstücks (6) jeweils mit jedem hinteren Schlitz (4) über eine Mehrzahl von Gleitklötzen (9), die entlang der Länge jedes Teils (6B) angeordnet sind, oder über einen länglichen Gleitklotz mit Gleitflächen eines ähnlichen Umkreises wie der hintere Schlitz (4) gekuppelt ist.

2. Sitzmöbel nach Anspruch 1, wobei die Schlitze (4, 5) durchgehend ausgebildet sind, und dass die Kupplungsstücke (7) sich über jede Seite der Schlitze (4, 5) erstrecken.

3. Sitzmöbel nach Anspruch 1, wobei die Schlitze (4, 5) nicht durchgehend ausgebildet sind, und dass die Kupplungsstücke (6, 7) sich nur über eine Seite der Schlitze (4, 5) erstrecken.

4. Sitzmöbel nach einem der vorhergehenden Ansprüche, zusätzlich umfassend einen getrennten Rahmen (8), in welchem die Schlitze (4, 5) untergebracht sind.

5. Sitzmöbel nach Anspruch 1 und 3, wobei die Schlitze (4, 5) in die Basiskonstruktion des Sitzmöbelstücks eingelassen sind.

6. Sitzmöbel nach einem der vorhergehenden Ansprüche, wobei in der Richtung der Vorderseite des Sitzmöbelstücks gesehen das hintere Kupplungsstück (6) im Wesentlichen L-förmig ist, wobei die Längsseite (6A) von L mit der Lehne (2) gekuppelt ist, und die kurze Seite (6B) von L mit dem Schlitz (4) über eine Mehrzahl von Gleitklötzen (9), die entlang der Länge der kurzen Seite von L angeordnet sind, gekuppelt ist.

7. Sitzmöbel nach Anspruch 6, wobei zwei auf dem hinteren Kupplungsstück (6) angeordnete Gleitklötze (9) im hinteren Schlitz (4) verlaufen, und dass ein auf dem vorderen Kupplungsstück (7) angeordneter Gleitklotz (10) im vorderen Schlitz (5) verläuft.

8. Sitzmöbel nach Anspruch 6 oder 7, wobei die Gleitklötze (9, 10) aus Kunststoff sind, zumindest der Teil des Fittings (1) die aus Stahl hergestellten Schlitze (4, 5) umfasst.

9. Sitzmöbel nach Anspruch 6 oder 7, wobei die Gleitklötze (9, 10) aus Verbundstoff sind, zumindest der Teil des Fittings (1) die aus Kunststoff hergestellten Schlitze (4, 5) umfasst.

10. Sitzmöbel nach einem der vorhergehenden Ansprüche, wobei am Sitz (3) hintere (11) und vordere (12) nach unten hervorspringende Verbindungsstücke zur drehbaren Befestigung am hinteren Kupplungsstück (6) bzw. dem vorderen Kupplungsstück (7) an jeweiligen Drehlagerstellen (13, 14) unlösbar befestigt sind, wovon die Drehlagerstelle (13) im hinteren Kupplungsstück (6) zwischen einer ersten Position (13A) und einer zweiten Position (13B) zur einfachen Änderung der Kippeigenschaften des Fittings (1) beweglich ist.

11. Sitzmöbel nach einem der vorhergehenden Ansprüche, wobei die virtuelle Drehachse (R) durch die Lehne (2), vorteilhafterweise auf einer Ebene mit der Lendenwirbelsäule des Rückens eines Benutzers, verläuft.

## Revendications

1. Meuble d'assise, comprenant un dossier (2) et un siège (3) et présentant un raccord (1), dans lequel le raccord (1), à ses deux côtés respectifs, comprend une fente arrière (4) et une fente avant (5) au même niveau sous le siège (3), ladite fente arrière (4) étant prévue comme une section en forme d'arc ou radiale, avec son centre de rotation, et ainsi un axe virtuel de rotation (R) du dossier (3), orienté vers le haut par rapport au cadre (1), et ladite fente avant (5) étant prévue comme une section en forme d'arc ou radiale dirigée de façon similaire, en variante une section linéaire avec un gradient dans la direction de l'avant de la pièce de meuble d'assise, et donc du raccord (1), dans lequel dans la fente arrière (4), une pièce d'accouplement arrière (6) s'étend et est couplée respectivement au dossier (2) et à une partie arrière du siège (3), et dans lequel dans la fente avant (5), une pièce d'accouplement avant (7) s'étend et est couplée à une partie avant du siège (3), **caractérisé en ce qu'**une partie (6B) de la pièce d'accouplement arrière (6) est couplée à chaque fente arrière (4) respectivement par l'intermédiaire d'une pluralité de blocs de glissement (9) arrangée le long de la longueur de chacune de ladite partie (6B) ou par l'intermédiaire d'un bloc de glissement allongé avec des faces de glissement d'un rayon similaire à la fente arrière (4).

2. Meuble d'assise selon la revendication 1, dans lequel les fentes (4, 5) sont traversantes, et que les pièces d'accouplement (7) s'étendent sur chaque côté des fentes (4, 5).

3. Meuble d'assise selon la revendication 1, dans lequel les fentes (4, 5) ne sont pas traversantes, et que les pièces d'accouplement (6, 7) ne s'étendent que sur chaque côté des fentes (4, 5).

4. Meuble d'assise selon l'une quelconque des revendications précédentes, comprenant en outre un cadre séparé (8), dans lequel les fentes (4, 5) sont agencées.

5. Meuble d'assise selon les revendications 1 et 3, dans lequel les fentes (4, 5) sont encastrées dans la structure réelle de la pièce de meuble d'assise.

6. Meuble d'assise selon l'une quelconque des revendications précédentes, dans lequel la pièce d'accouplement arrière (6) est essentiellement en forme de L, vu dans la direction de l'avant de la pièce de meuble d'assise, le côté long (6A) du L étant couplé au dossier (2) et le côté court (6B) du L étant relié à la fente (4) par l'intermédiaire d'une pluralité de blocs de glissement (9) agencés le long de la longueur du côté court de L.

7. Meuble d'assise selon la revendication 6, dans lequel les deux blocs de glissement (9) disposés sur la pièce d'accouplement arrière (6) s'étendent dans la fente arrière (4), et qu'un bloc coulissant (10) disposé sur la pièce d'accouplement avant (7) s'étend dans la fente avant (5).

8. Meuble d'assise selon la revendication 6 ou 7, dans lequel les blocs de glissement (9, 10) sont en matière plastique, au moins la partie du raccord (1) comprenant des fentes (4, 5) étant en acier.

9. Meuble d'assise selon la revendication 6 ou 7, dans lequel les blocs de glissement (9, 10) sont en matière composite, au moins la partie du raccord (1) comprenant des fentes (4, 5) étant en matière plastique.

10. Meuble d'assise selon l'une quelconque des revendications précédentes, dans lequel au siège (3) sont attachées de manière fixe des pièces de raccordement arrière (11) et avant (12) faisant saillie vers le bas pour l'attachement à pivotement respectivement à la pièce d'accouplement arrière (6) et à la pièce d'accouplement avant (7) à des points respectifs de palier de pivotement (13, 14), dont le point de palier de pivotement (13) dans la pièce d'accouplement arrière (6) peut se déplacer entre une première position (13A) et une deuxième position (13B) pour la modification facile des propriétés d'inclinaison du raccord (1).

11. Meuble d'assise selon l'une quelconque des revendications précédentes, dans lequel l'axe virtuel de rotation (R) s'étend à travers le fond (2), avantageusement au niveau de la région lombaire du dos d'un utilisateur
